Europäisches Patentamt

European Patent Office

Office européen des brevets

(19)

(11) Publication number: **0 256 644 B1**

# EUROPEAN PATENT SPECIFICATION

(12)

(45) Date of publication of patent specification: **22.01.92**

(51) Int. Cl.⁵: **B29C 55/30**, //(B29K27/18, B29L23:22)

(21) Application number: **87305748.3**

(22) Date of filing: **29.06.87**

(54) **Method and apparatus for drawing thermoplastic tubing.**

(30) Priority: **18.08.86 US 897385**

(43) Date of publication of application:
**24.02.88 Bulletin 88/08**

(45) Publication of the grant of the patent:
**22.01.92 Bulletin 92/04**

(84) Designated Contracting States:
**BE CH DE ES FR GB IT LI NL SE**

(56) References cited:
**EP-A- 0 133 355**
**EP-A- 0 157 601**
**US-A- 2 194 313**
**US-A- 2 661 499**

(73) Proprietor: **TECHNICON INSTRUMENTS COR-
PORATION(a Delaware corporation)
511 Benedict Avenue
Tarrytown, New York 10591-5097(US)**

(72) Inventor: **Raczkowski, Jan
77-26A 74th Street
Glendale New York 11385(US)**

(74) Representative: **Wain, Christopher Paul et al
A.A. THORNTON & CO. Northumberland
House 303-306 High Holborn
London WC1V 7LE(GB)**

## Description

This invention relates to a method and apparatus for drawing thermoplastic tubing, particularly fluoropolymer tubing. The drawn tubing has particular utility in systems which provide automatic analysis of liquid samples.

Thermoplastic tubing has proven to be particularly useful in the automatic liquid analysis of liquid samples. These systems selectively treat and analyze a plurality of liquid samples that are passed through the tubing in seriatim. For example, in U.S. patents nos. 2,797,149 and 3,241,432, a plurality of liquid samples are introduced successively as a continuously flowing stream into an analysis apparatus, mixed with reagents and analyzed for particular constituents. The successive liquid samples in the flowing stream are separated by at least one air segment of sufficient volume to occlude the conduit along which the stream is directed. Contamination between successive liquid samples and the flowing stream is prevented by the presence of air segments, which function to maintain the successive samples discrete from one another.

Fluorocarbon tubing, eg. Teflon (trademark) tubing, has proved to be particularly useful in these systems by virtue of its highly non-wetted surface properties. When the surface of the tubing is further coated with a fluorocarbon oil, the thin oil film virtually encapsulates each liquid sample and prevents the sample from ever contacting the wall of the tubing. This technology is of particular utility in medical testing because of the large number of tests to be performed on a given sample, and the sometimes limited volume of the sample to be analyzed. In the latest generation of these systems, a single microliter of a sample can be mixed with a reagent and analyzed in a discrete test.

To accurately process liquid samples of this size, to maintain the sample encapsulated within the carrier oil, and to provide a constant and ascertainable throughput for given lengths of tubing, the dimensional characteristics of commercially available Teflon tubing must be improved by several orders of magnitude.

In addition, these automatic liquid analysis systems frequently use optical systems in the analysis step which require the tubing to be optically clear with minimum transmittance losses to avoid analysis errors and excessive recalibration each time the tubing is changed.

Commercially available medical grade clear Teflon tubing does not possess the requisite dimensional and optical characteristics necessary for the latest generation of automatic liquid analyzers. For example, .5 mm tubing having the diameters of 0.020 ID and .034 OD (0.51 and 0.86 mm), is customarily supplied with a tolerance of ± .002 (0.051 mm) and is frequently milky or cloudy having a transmittance, in the visible range, of 75%, even though the material is technically capable of transmittance of 90 to 95%, depending upon the type of Teflon used. (Diameters and other lengths are in inches unless otherwise specified.)

It is known from US-A-2661499 and US-A-2194313, to draw heated thermoplastic polymer tubing through a die. US-A-2194313 describes a method and apparatus for heating the tubing in a liquid bath, drawing it through a polished die to reduce its diameter, and then rapidly cooling the drawn tubing.

We have now devised a method and apparatus particularly for treating fluoropolymer tubing to improve its dimensional tolerances and its optical transmittance, and in particular for drawing it to enhance its dimensional and optical characteristics. It is possible in accordance with the present invention to improve the concentricity of the inside and outside diameters of fluoropolymer tubing, particularly Teflon, and to substantially eliminate ovalization, out of roundness, and variations in wall thickness. It is also possible to improve the optical transmittance of commercially available medical grade Teflon tubing to a transmittance value as high as 90-95%, for example. Also, it is possible to create a transition tube having two different diameters in a single length of tubing, each diameter of which is concentric and uniform.

According to one aspect of the invention there is provided a method of drawing thermoplastic tubing to enhance properties thereof, which comprises heating the tube in a liquid bath, and drawing the tubing through a polished die to reduce the diameter of the tubing, and rapidly cooling the drawn tubing; characterised in that the thermoplastic tubing is fluoropolymer tubing, and the liquid bath has a temperature of at least 150°C.

The invention also includes apparatus for drawing thermoplastic tubing to enhance the optical and dimensional properties thereof, said apparatus comprising:

(a) a liquid bath means for heating the tubing;

(b) a drawing die positioned immediately adjacent said liquid bath means for drawing said tubing after it has been heated,

(c) means for drawing said tubing through said heating means and said drawing die,

(d) cooling means for rapidly cooling the tubing; characterised in that the thermoplastic tubing is fluoropolymer tubing and the liquid bath means is a hot oil bath for heating the tubing to at least 180°C.

The invention further includes a fluorocarbon tube made by the method of the invention and having an outside diameter of from .25 to 2.5 mm, a concentricity greater than 95%, and an optical transmittance greater than 90%.

In accordance with the invention, fluoropolymer eg. Teflon tubing is drawn to enhance the optical and dimensional properties thereof, wherein the tubing is heated in a high temperature oil bath, and the oil bath has a temperature of at least 150°C. The tubing is then drawn preferably through a polished diamond die, the die preferably having a drawing diameter at least 10% smaller than the diameter of the tubing. The tubing is then rapidly cooled, and preferably annealed to at least 100°C for at least 45 minutes to provide stress relief and a permanent set at the new diameter.

In another preferred arrangement of the invention, a method for continuously redrawing fluoropolymer tubing comprises advancing a length of tubing through a high temperature oil bath and drawing it through a polished diamond die with a tube gripper pulled by a variable speed motor. The diameter of the advancing tubing is then measured to generate at least one control signal, which is a function of the outside diameter of the drawn tubing. This control signal is then used to control the variable speed motor, wherein the speed of the drawing motor is slowed to increase the diameter of the tubing to a predetermined dimension.

In order that the invention may be more fully understood, reference is made to the accompanying drawings, wherein:

FIGURE 1 is a partially cross-sectional and diagrammatic view of one embodiment of apparatus used to draw lengths of straight Teflon tubing in accordance with the invention;

FIGURE 2 is a diagrammatic flowchart of the method of the present invention;

FIGURE 3 is a cross-sectional view of one form of polished diamond die which may be used in the present invention;

FIGURE 4A is a diagrammatic representation of commercially available Teflon tubing illustrating a variation in concentricity;

FIGURE 4B is a diagrammatic cross-sectional view of commercially available Teflon tubing illustrating ovalization;

FIGURE 4C is a cross-sectional and diagrammatic view illustrating the problems presented by non-concentricity or out-of-round tubing, when used in an automatic liquid analysis system;

FIGURE 5A is a diagrammatic cross-sectional view of a transition tubing used in automatic liquid analysis systems;

FIGURE 5B is a diagrammatic and cross-sectional view of the tubing illustrated in Figure 5A, taken along section line 5-5', when prepared in accordance with the present invention;

FIGURE 5C is a diagrammatic and cross-sectional view of a transition tubing taken along section line 5-5', illustrated in Figure 5A, when the tubing is drawn with conventional prior art drawings techniques; and

FIGURE 6 is a diagrammatic view of another embodiment of the present invention, particularly adapted for a continuous drawing of a spool of thermoplastic tubing.

It is believed that the present invention is applicable to all thermoplastic tubing, including acetals, acrylics, polyamides, polycarbonates, polyethylenes, polypropylenes, ABS and PVC resins, but is of a particular benefit to the fluorocarbon resins which include Teflon TFE, polytetrafluoroethylene; Teflon FEP, a copolymer of tetrafluoroethylene and hexafluoropropylene; and Teflon PFA, polytetrafluoroethylene with a perfluoroalkoxy side chain.

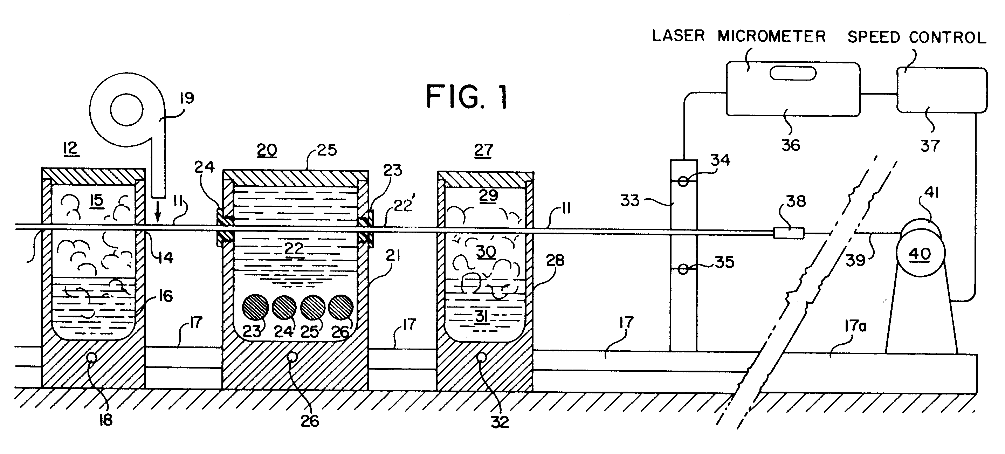

As illustrated in Figure 1, a six foot (1.8m) length of Teflon PFA, fluoropolymer tubing 11 is being drawn to enhance its dimensional and optical properties. The first treating station 12 is a cleaning station which removes particles of dirt and other surface contaminants from the tubing. This cleaning station, in a preferred embodiment, includes an entrance port 13 and an exit port 14, and a cleaning chamber 15 filled with alcohol saturated cotton wool, and an alcohol bath 16. The wicking action of the cotton wool provides a continuous renewal of the cleaning solvent at the surface of the tubing 11 as it is drawn through the cleaning station. The cleaning station 12 is adjustably mounted on an alignment rail 17 and fixed in the position illustrating in Figure 1 by means of adjusting nut 18. As the tubing 11 exits the cleaning station, it is dried by means of static eliminator 19 that provides a flow of ionized air over the tubing to dry the alcohol and to discharge any static build-up on the tube which would attract airborne particles and negate the action of the cleaning station.

After the tubing has been cleaned, it is heated in a hot oil bath in station 20. Station 20 includes a housing member 21 filled with a fluorocarbon oil 22 which is heated with a series of electrical cartridge heaters 23-26, which in the preferred embodiment are 75 watts ($2.7 \times 10^5$ J) each, for a total of 300 watts ($1.1 \times 10^6$ J) of electrical heating.

In the preferred embodiment, 3M Fluorinet FC-71 oil is used. This oil is normally used as a dielectric coolant, and has a high 250°C boiling point. The temperature of the oil bath is normally maintained at 200-220°C. While higher temperatures will enable a shorter residence time in the heating bath, they also increase the danger of boiling the oil and vaporizing a potentially hazardous material into the atmosphere. Below 150°C it has been found that there is a memory rebound in fluorocarbon tubing that will cause the tubing to return towards its initial dimensions.

It is desired in the heating step to soften the tubing through the entire thickness of the wall of the tubing without exceeding the melting point of the tubing or the boiling point of the oil. As such, the thickness of the tubing wall, the thermal conductivity of the plastic, and the boiling point of the oil must be taken into account in fixing the residence time and the temperature of the oil bath. For the purpose of this application this temperature is termed the transition temperature. While 180°C-200°C has been found to be desirable for the fluoropolymers, the exact mechanics of the transition temperature are unknown. Temperatures of from 180°C to 200°C are significantly below the melting temperatures of 280°C for Teflon FEP and 300°C for Teflon PFA, and far below the recommended molding extrusion temperature of 425°C. It is noted that the flexural modulus of Teflon has dropped by a factor of 10 between 23°C and 250°C, and it is speculated that in some way the semi-crystalline nature of the Teflon has been altered at the transition temperature. Post process crystallization may also be involved in the enhancement of optical clarity and the annealing stress relief step.

As such, the use of a high temperature liquid bath, heated to empirically determined transition temperatures, would be applicable to other semi-crystalline thermoplastics which include the polyolefins, acetals and thermoplastic polyesters in addition to the fluoropolymers.

For the amorphous thermoplastics, such as polyvinyl chloride, polymethyl methacrylates and ABS resins, it is felt that the desired liquid bath temperature would be substantially lower and near the glass transition temperature of the plastic being drawn.

In the present invention, using Teflon PFA or Teflon PTFE tubing, a residence time of 8-16 seconds, depending upon the thickness of the tubing wall, has proved to be satisfactory. In the present invention, the oil bath 22 is approximately 3 inches (7.6 cm) in length, at a draw speed of approximately 10-25 inches per minute (25.4 to 63.5 cm per minute) is used.

The draw speed also bears a functional relationship to the stress exerted on the tubing as it is pulled through the drawing die 22. In the preferred embodiment, with the above oil bath, and a die having a drawing diameter of .0335 (0.85 mm), a drawing speed of 22 inches (55.9 cm) per minute has been found to be satisfactory when drawing tubing of 1 mm diameter.

The drawing die 22′ is mounted in a die holder 23 which threadedly engages the wall of housing 21 to secure the drawing die 22′ in place. An O ring formed of Buna. N, a high temperature synthetic rubber, may be used between the die and die holder to prevent the escape of oil from the drawing die. The entrance to the oil bath is sealed by a Teflon bushing 24 which is press fitted in place, and held in place during the drawing step by the frictional engagement with the Teflon tubing 11. The housing 21 and the oil bath 22 are covered with a lid 25 to prevent the escape of vapours therefrom. The housing 21 is likewise secured to the alignment rail 17 by means of an adjustable lock nut 26.

After the tubing member 11 has been drawn to the desired diameter by means of the polished die 22′, it is quickly or rapidly cooled by means of an alcohol bath in the cooling station 27. Cooling station 27 includes a housing 28 having a chamber 29 filled with cotton wool 30 and an alcohol bath 31, which provides a continual supply of alcohol to the tubing 11 by virtue of the wicking action of the cotton wool 30. The cooling station 27 cools the Teflon tubing from approximately 200°C to approximately 40°C by virtue of the evaporation of alcohol from the surface of the tubing as it passes through the cooling station. The housing member 28 is likewise secured to alignment rail 17 by means of adjustment screw 32.

It has been found that rapidly cooling the tubing after it has been drawn to the desired diameter, enhances the optical characteristics of the tubing and improves the optical transmittance thereof.

After the tubing has exited cooling station 27, it is measured by means of a laser micrometer, one half of which is illustrated in Figure 1 at 33. As noted in Figure 6, a laser micrometer normally includes one tower on either side of the tubing to be measured, with each tower having a laser 34 and a photosensitive diode 35 mounted thereon. The laser beams cross at the tubing to provide measurements in x and y planes of the outside diameter of the tubing. The output of the photo diode is fed to the computation and display circuitry 36, and may also be used to derive a first control signal to regulate speed control 37. The Teflon tubing 11 is pulled through the draw box by means of a tube gripping means 38 attached to a draw wire 39 which is wound about drum 40 and turned by electric motor means 41. The electric motor means 41 is an adjustable speed motor with the speed thereof regulated by speed control means 37. As noted in Figure 1, the alignment rail 17 is split between sections 17 and 17a to better illustrate the present invention. In actual practice, the distance between the towers 33 of the laser micrometer and the drawing drum 40 is substantially equal to the length of the tubing to be drawn to ensure that the tensile forces exerted on the tubing are linear in nature during the drawing process. In the preferred embodiment, the diameter of the drawing drum is approximately 1 inch (2.5 cm), and the motor means 41 rotates drum 40 at approximately 7.5 rpm. Increasing the speed of the motor, reduces the diameter of the drawn tubing, while decreasing the speed of the motor increases the diameter of the drawn tubing.

After the tubing has been drawn, it is annealed or heat treated in an oven (not illustrated in Figure 1) for stress relaxation. In the preferred embodiment, the tubing is heated to a temperature of 150° C for approximately 45 minutes. It has been found that the drawn Teflon tubing may change its dimensions after approximately 30 days or so unless it has been subjected to the stress relaxation step.

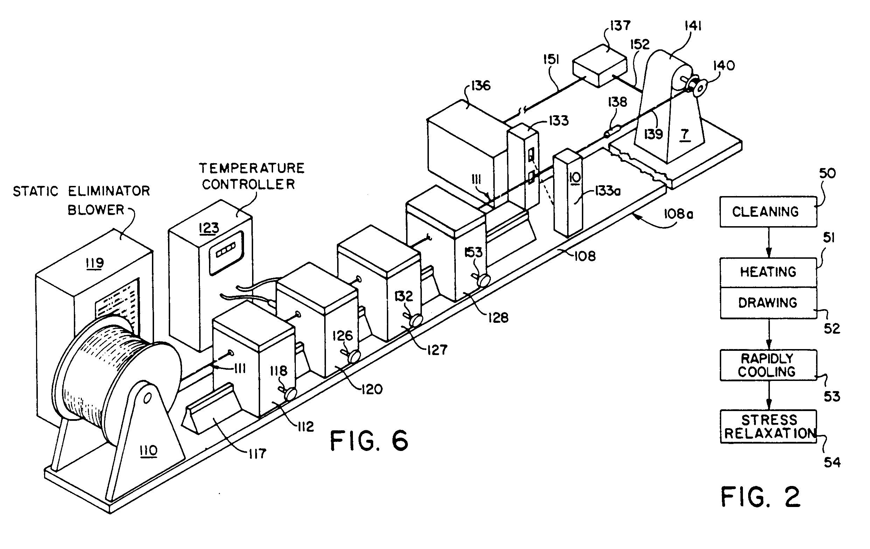

In summary, the process for drawing fluorocarbon tubing, as illustrated in Figure 2, includes a first step 50 to remove any foreign particles from the surface of the tubing that otherwise might cause scratches or abrasions. The tube is then heated to the transition temperature, as indicated at step 51, to soften the walls of the tubing. The temperature of the oil bath is maintained between 180° C and 220° C with a residence time of 8-16 seconds. Following the conclusion of the heating step, the tubing is drawn through a polished diamond die in the drawing step 52. This die is nominally at least 10% smaller than the outside diameter of the tubing to be drawn. Following the conclusion of the drawing step, the tubing is rapidly cooled by an alcohol bath in step 53 to enhance its optical characteristics. The cooling normally reduces the temperature of the tubing from approximately 200° C to 40° C. Following the cooling step, the tubing is subjected to a second heating step 54 for annealing or stress relaxation of the tubing. In this step, the tubing is reheated to a temperature of approximately 150° C for a period of 30-60 minutes.

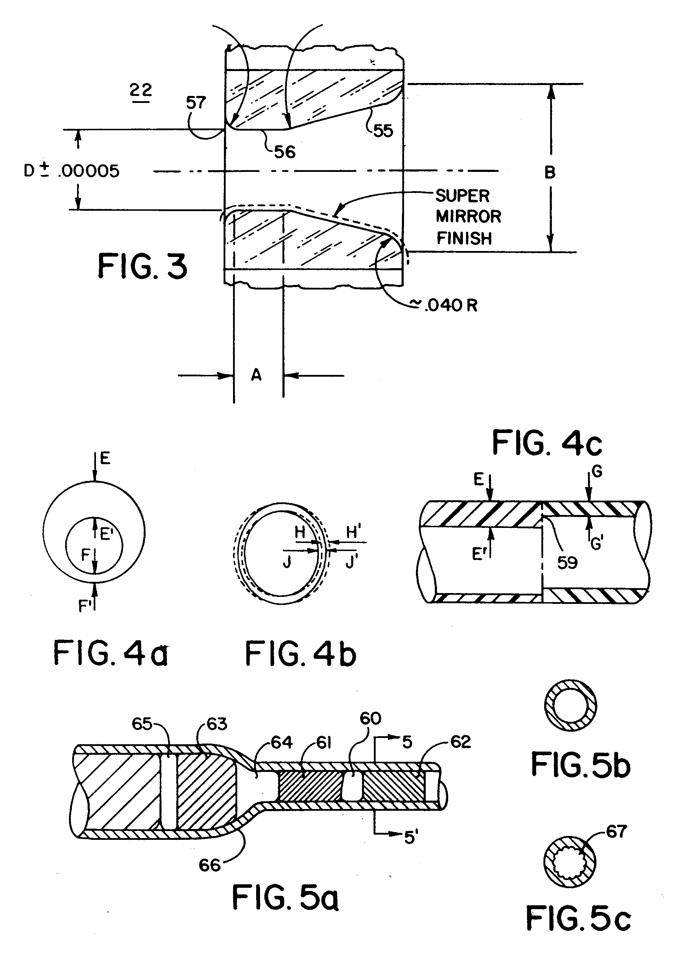

A cross-section of one of one of the polished diamond dies is illustrated in Figure 3. While both synthetic ruby and stainless steel drawing dies were attempted, neither provided satisfactory results in terms of optical clarity. In the preferred embodiment, a natural diamond was used to provide the desired optical clarity. As illustrated in Figure 3, the final drawing dimension is accurate within the tolerance of ± .0005 (.0013 mm). Normal commercially available medical grade, clear Teflon tubing is accurate within a tolerance of .002 (.051 mm). This, however, is more than twice the error that can be tolerated in the latest generation of automatic liquid analysis systems. As it will be hereinafter explained with respect to Figure 4, an error of .001 (.025 mm) will disrupt the carrier film and provide possible contamination between samples. The present invention, when used with the diamond die illustrated in Figure 3, will provide tubing drawn to an accuracy of ± .0002 (.0051 mm), or a factor of ten times as great as commercially available extruded tubing. As illustrated in Figure 3, the diamond die has an entrance zone 55, a drawing zone 56 and a relaxation zone 57. The drawing dimension in zone 56 is normally selected to be approximately 10% smaller than the final outside diameter of the tubing desired. Thus, a diamond die having a .0335 (0.85 mm) diameter will yield Teflon tubing of approximately .0380 (0.965 mm) in diameter. In practice, dies having drawing diameters of 0.0250 to 0.0950 inches (0.635 to 2.41 mm) have been prepared and used with success. In the design of the die, it has been found that the dimension of the drawing section 56, indicated by zone A in Figure 3, should not be shorter than 50% of the diameter D, while diameter B should be at least two times larger than diameter D. The transition between the entry zone 55, the drawing zone 56, and the stress relief zone 57 is radiused to a radius of 0.020 inches (0.508 mm). The entry radius, prior to the entry zone, is radiused to .040 inches (1.02 mm).

The tubing to be drawn through the die can range from 10% to 100% larger than the drawing diameter D of the die. In actual practice, a 0.45 inch (1.14 mm) tubing is drawn through a die of .035 (0.89 mm) to produce a .038 (0.97 mm) final diameter tubing. It has been found, however, that tubing diameter as large as 1.5 mm may be used to produce 1 mm tubing, while 1 mm tubing may be used to produce 0.5 mm tubing.

The benefits to be gained by using the drawn Teflon tubing in an automatic liquid analysis system, together with a summary of the problems caused by commercially available tubing in such a system will be described with respect to Figures 4 and 5.

Figure 4A is a cross-section of a commercially available medical grade Teflon tubing, with the scale and size of the tubing exaggerated to illustrate the problems involved. As it is readily apparent from the exaggerated scale, that the dimension e-e' is substantially larger than the dimension f-f' because the tubing lacks concentricity, even though the ID and OD are relatively uniform. Concentricity in commercially available Teflon tubing is normally supplied to meet an 80% concentric specification. While the ID and OD are supplied with any tolerance of .002 (.05 mm), a variation in concentricity of 20% can result in a .007 (0.18 mm) error, as illustrated in Figure 4C. Figure 4C is a cross-sectioned and diagramatic view of the junction point of two lengths of Teflon tubing, wherein a non-concentric tubing has been joined to a concentric tubing. The wall thickness of the correctly drawn tubing g-g' is approximately 0.11 (2.8 mm) wherein the wall thickness of the nonconcentric tubing e-e' could be approximately .018 (0.46 mm) for 1 mm tubing. The mismatch, indicated by reference numeral 59 in Figure 4C, can be as great as .007 (0.18 mm). Unfortunately, a mismatch of this magnitude will destroy the thin carrier oil which protects the Teflon tubing from the sample to be analyzed. This would allow cross contamination of the samples if such a mismatch occurred within an automatic liquid analysis machine.

The use of microliter samples requires a tolerance on the order of .001 (0.025 mm) for successful operation. The mismatch caused by lack of concentricity illustrated in Figures 4A and 4C, is one example of the problems encountered in the use of conventional commercially available Teflon tubing. Figure 4B illustrates another example wherein ovalization of the tubing has occurred, wherein h-h′ illustrates the tubing before ovalization, and j-j′ illustrates the ovalized tubing. Ovalization frequently occurs when tubing is wrapped onto a spool before its elastic memory has completely set.

Still another problem that can result is variations between the desired ID and OD. A .001 (.025 mm) error, over a five foot (1.52 m) length of tubing, can result in a sample displacement of 1.7 inches (4.32 cm), more than eight times the length of the sample itself. This magnitude of error can have grave consequences in the operation of an automatic analysis machine since each micro-liters sample, as it travels through a 1 mm tubing, occupies only 2/10 of an inch (5.1 mm) of linear space. This greatly complicates timing problems in correlating the arrival of the sample at the analysis station, with the definition of the sample at the input station. This is particularly a problem if two or more samples are drawn, and sent to different analysis stations for analysis. Thus, the dimensional tolerances of commercially available Teflon tubing, even of medical grade, is not satisfactory for use in the latest generation of automatic liquid analysis machines. The present invention, however, provides accuracy for both OD and ID of ± .0002 (.005 mm), a ten fold improvement. In addition, concentricity rises to a virtual 100% at 100 x magnification when treated in accordance with the method of the present invention.

In addition to the physical problems, the optical clarity of commercially available Teflon tubing is not satisfactory for use in these machines. While Teflon tubing is theoretically capable of transmittance of 90-95%, tubing is frequently on the order of 75 to 80%, and may be scratched, or milky rather than clear. It is known that the use of stainless steel extrusion dies will result in fine scratch marks on the tubing as the crystal structure of the stainless steel abrades the tubing. This degrades the optical clarity of the tubing. It is believed that the milky appearance of some tubing is due to the incomplete homogenization of the Teflon powder used to extrude the tubing. It has been found that the oil bath, the diamond die, and the rapid cooling of the tubing result in substantially improved optical qualities, approaching the theoretical maximum of tubing.

The present invention provides still another advantage with respect to conventional extruding and drawing techniques. Figure 5A illustrates the "vanish zone" used in the latest generation of automatic liquid analyzers. In this zone, small immiscible air bubbles 60, that separate sample 61 and reagent 62 vanish, and allow the sample to be mixed with the reagent as indicated by the mixed sample 63. Also used in these systems, larger immiscible air bubbles indicated at 64 and 65 are used to separate the different samples for testing. When the serial progression of samples and reagents reaches the vanish zone 66, the smaller immiscible bubbles 60 become merged with the larger separating bubbles 64 and allow the sample and the reagent 61, 62 to combine for a reaction.

Attempts to create this "vanish zone" with conventional Teflon tubing, and conventional drawing and extruding techniques resulted in tubing having the cross-sectional configuration illustrated in Figure 5C, wherein Figure 5C represents a section taken along section line 5-5′ of Figure 5A. In conventional cold drawing techniques, the Teflon was reduced in diameter, but it resulted in substantial crinkling of the inner walls of the tubing, with the ridges and valleys noted at 67 exceeding .001 inches (.025 mm) in size. This destroyed the integrity of the oil film surrounding the samples and reagents, and would lead to cross contamination of samples. By treating the tubing in accordance with the method described in the present invention, the cross-sectional configuration illustrated in 5B resulted, with no inner crinkling of the drawn tubing. To form the tubing illustrated in Figure 5A, a 1.5 mm tubing is first drawn completely through the apparatus illustrated in figure 1 to provide precise dimensional tolerances for the entire length of the tubing. Following the stress relaxation step, the set of dies for 1 mm tubing are installed in the apparatus, and the tubing is advanced half way through the drawing die. When the desired transition point has reached the drawing die 22, illustrated in Figure 1, the motor means 41 is reversed, and the tubing is withdrawn from the apparatus.

Figure 6 illustrates still another embodiment of the present invention particularly adapted for rapid continuous processing of thermoplastic tubing. A spool of conventionally extruded thermoplastic tubing has been mounted on a free wheeling spool support 110. The tubing 111 is drawn from the spool and passes through a first cleaning station 112. Simultaneously, an electrostatic blower 119, for eliminating static electricity, is discharging a stream of ionized air on either side of the cleaning station 112. From cleaning station 112, the tubing then passes through a heated drawbox 120 having an internal oil bath (not illustrated in Figure 6) which is heated to a predetermined temperature by temperature controller 123. The outlet side of the draw box 120 contains a diamond die similar to that illustrated in Figure 3 for drawing the tubing 111 to a precise dimensional tolerance. After exiting the drawing die, the tubing passes to cooling station 127 where it is rapidly cooled to room temperature by means of a liquid bath. Following the rapid cooling step, the tube is reheated in a stress relief zone 128 and measured by a laser micrometer 136 having first 133 and second 133a laser towers. Each of the towers contains a laser beam and a photo diode assembly for measuring the tubing 11 in both the x and y planes. The tubing is pulled through the apparatus illustrated in Figure 6 by means of a tube gripper 138 attached to a draw wire 139 which is wound around a pulling spool 140 and rotated by a variable speed motor 141. The laser micrometer 136 may also generate a first control signal which is sent to the speed controller 137 by means of circuit 151. The speed of motor 141 is then controlled by speed controller 137 over circuit 152. The entire apparatus is aligned along alingnment rail 117 with each station fixed in position by means of adjusting screws 118, 126, 132, and 153.

It should be noted that the stress relief box 128, illustrated in Figure 6, could provide the desired stress relief temperature of 150˚C by virtue of an oil bath similar to that illustrated by oil bath 22 in Figure 1. While this may be sufficient for some thermoplastic tubing, it has been found that Teflon tubing needs a longer residence time, on the order of 30 to 60 minutes to prevent elastic rebound of the Teflon towards its prior configuration. While the redrawn tubing could be wrapped around the drawing spool, if appropriate corrections were made in the drawing speed as a function of the spool diameter, in the preferred embodiment of the invention, it has been found desirable to draw a specific length of tubing for the desired application, and then sever the tubing at the laser micrometer. The variable speed motor is then reversed, and the tube gripper is returned to the laser micrometer to advance a second length of tubing through the drawing apparatus. In this connection, it should be noted that base members 108 and 108a have been separated to indicate that the two devices should be spaced the desired distance of the tubing to be drawn.

While only certain preferred embodiments of this invention have been described, it is understood that many variations are possible without departing from the scope of this invention as set out in the claims.

## Claims

1. A method of drawing thermoplastic tubing to enhance properties thereof, which comprises heating the tube in a liquid bath, and drawing the tubing through a polished die to reduce the diameter of the tubing, and rapidly cooling the drawn tubing; characterised in that the thermoplastic tubing is fluoropolymer tubing, and the liquid bath has a temperature of at least 150˚C.

2. A method according to claim 1, wherein the die has a drawing diameter at least 10% smaller than the diameter of the tube to be drawn.

3. A method according to claim 1 or 2, wherein the drawn tubing is annealed by re-heating to a stress relief temperature.

4. A method according to claim 1,2 or 3, wherein the tubing is first cleaned with a liquid bath before the heating step.

5. A method according to any of claims 1 to 4, which further includes the steps of measuring the drawn tubing, and varying the draw force supplied to the tubing in response to the measurements obtained, whereby the drawing force is reduced to increase the final diameter of the drawn tubing.

6. A method according to any of claims 1 to 5, wherein the high temperature liquid is an oil bath, the tubing being immersed in the oil bath preferably for 8-16 seconds immediately prior to the drawing step.

7. A method according to claim 6, wherein the high temperature liquid bath is a synthetic fluorocarbon oil.

8. A method according to any of claims 1 to 7, wherein the polished die is a polished diamond die.

9. A method according to any of claims 1 to 8, wherein the tubing is drawn through the polished die with a gripper pulled by an adjustable speed motor means.

10. A method according to claims 5 and 9 which is carried out continuously and which further includes the steps of optically measuring the diameter of the advancing drawn tubing to generate at least one control signal which is a function of the outside diameter of the drawn tubing, and controlling the adjustable speed motor by said control signal(s), wherein the speed of the drawing motor is slowed to increase the diameter of the drawn tubing to a predetermined dimension.

11. A method according to any preceding claim wherein the liquid bath has a temperature of at least 180° C.

12. Apparatus for drawing thermoplastic tubing to enhance the optical and dimensional properties thereof, said apparatus comprising:
    (a) a liquid bath means for heating the tubing;
    (b) a drawing die positioned immediately adjacent said liquid bath means for drawing said tubing after it has been heated,
    (c) means (140) for drawing said tubing through said heating means and said drawing die,
    (d) cooling means (127) for rapidly cooling the tubing;
characterised in that the thermoplastic tubing is fluoropolymer tubing and the liquid bath means is a hot oil bath for heating the tubing to at least 180° C.

13. Apparatus according to claim 12, which further comprises:
    (e) means (136) for measuring the tubing after it has been drawn, and generating a control signal in response thereto,
    (f) variable speed motor means (141) responsive to said control signal for varying speed of the means for drawing said tubing, whereby the drawing speed can be decreased to increase the diameter of the drawn tubing.

14. Apparatus according to claim 12 or 13, wherein the drawing die is a polished diamond die.

15. A fluorocarbon tube which has been drawn by the method of claim 1 and has an outside diameter of from .25 to 2.5 mm, a concentricity greater than 95%, and an optical transmittance greater than 90%.

**Revendications**

1. Procédé d'étirage de tuyaux thermoplastiques pour améliorer leurs propriétés, consistant à chauffer le tuyau dans un bain de liquide, à étirer le tuyau dans une filière polie pour réduire son diamètre, puis à refroidir rapidement le tuyau étiré, caractérisé en ce que le tuyau thermoplastique est un tuyau de fluoropolymère, et le bain de liquide a une température d'au moins 150° C.

2. Procédé selon la revendication 1, dans lequel la filière a un diamètre d'étirage inférieur d'au moins 10 % au diamètre du tuyau à étirer.

3. Procédé selon la revendication 1 ou 2, dans lequel le tuyau d'étirage est recuit en étant de nouveau chauffé jusqu'à une température de relaxation des contraintes.

4. Procédé selon la revendication 1, 2 ou 3, dans lequel le tuyau est d'abord nettoyé avec un bain de liquide avant la phase de chauffage.

5. Procédé selon l'une quelconque des revendications 1 à 4, qui comprend en outre les phases consistant à mesurer le tuyau étiré, et à modifier la force d'étirage appliquée sur le tuyau en réponse aux mesures obtenues, de manière que la force d'étirage soit réduite pour augmenter le diamètre final du tuyau étiré.

6. Procédé selon l'une quelconque des revendications 1 à 5, dans lequel le liquide à haute température est un bain d'huile, le tuyau étant immergé dans le bain d'huile de préférence pendant 8 à 16 secondes, juste avant la phase d'étirage.

7. Procédé selon la revendication 6, dans lequel le bain de liquide à haute température est une huile de fluorocarbone synthétique.

8. Procédé selon l'une quelconque des revendications 1 à 7, dans lequel la filière polie est une filière en diamant polie.

9. Procédé selon l'une quelconque des revendications 1 à 4, dans lequel le tuyau est étiré dans la filière polie avec un dispositif de préhension tiré par un moteur à vitesse variable.

10. Procédé selon les revendications 5 et 9 qui est continu et qui comprend en outre les phases consistant à mesurer optiquement le diamètre du tuyau étiré avancé afin de produire au moins un signal de commande qui est fonction du diamètre extérieur du tuyau étiré, et à commander le moteur à vitesse variable par ledit (lesdits) signal (aux), dans lequel la vitesse du moteur d'étirage est ralentie pour augmenter le diamètre du tuyau étiré jusqu'à une dimension prédéterminée.

11. Procédé selon l'une quelconque des revendications précédentes, dans lequel le bain de liquide a une température d'au moins 180 °C.

12. Appareil pour étirer les tuyaux thermoplastiques afin d'améliorer leurs caractéristiques optiques et dimensionnelles, ledit appareil comprenant :

(a) un bain de liquide pour chauffer le tuyau;

(b) une filière d'étirage positionnée immédiatement adjacente audit bain de liquide pour étirer ledit tuyau après son chauffage,

(c) un moyen (140) pour étirer ledit tuyau dans ledit moyen de chauffage et ladite filière d'étirage,

(d) un moyen de refroidissement (127) pour refroidir rapidement le tuyau;

caractérisé en ce que le tuyau thermoplastique est un tuyau de fluoropolymère et le bain de liquide est un bain d'huile chaude pour chauffer le tuyau à 180 °C au moins.

13. Appareil selon la revendication 12, qui comprend en outre :

(e) un moyen (136) pour mesurer le tuyau après son étirage, et produire un signal de commande en réponse à ladite mesure,

(f) un moteur à vitesse variable (141) répondant audit signal de commande pour modifier la vitesse du moyen d'étirage dudit tuyau,

de manière que la vitesse d'étirage puisse être réduite pour augmenter le diamètre du tuyau étiré.

14. Appareil selon la revendication 12 ou 13, dans lequel la filière d'étirage est une filière en diamant polie.

15. Tuyau en fluorocarbone qui a été étiré selon le procédé de la revendication 1 et a un diamètre extérieur compris entre 0,25 et 2,5 mm, une concentricité supérieure à 95 %, et une transmission optique supérieure à 90 %.

**Patentansprüche**

1. Verfahren zum Ziehen Von Thermoplast-Rohren zum Verstärken der Eigenschaften der Rohre, bei dem man das Rohr in einem Flüssigkeitsbad erhitzt und dann das Rohr zum Vermindern des Rohrdurchmessers durch ein poliertes Werkzeug zieht und das gezogene Rohr schnell abkühlt, **dadurch gekennzeichnet,** daß das Thermoplast-Rohr ein Fluorpolymer-Rohr ist und daß das Flüssigkeitsbad eine Temperatur von wenigstens 150 °C hat.

2. Verfahren nach Anspruch 1, bei dem das Werkzeug einen Ziehdurchmesser hat, der wenigstens um 10% kleiner als der Durchmesser des zu ziehenden Rohres ist.

3. Verfahren nach Anspruch 1 oder 2, bei dem das gezogene Rohr durch Wiedererhitzen auf eine spannungsfrei machende Temperatur getempert wird.

4. Verfahren nach Anspruch 1, 2 oder 3, bei dem das Rohr zuerst vor dem Erhitzungsschritt mit einem Flüssigkeitsbad gereinigt wird.

5. Verfahren nach einem der Ansprüche 1 bis 4, bei dem die weiteren Schritte vorgesehen sind, daß man das gezogene Rohr mißt und die auf das Rohr ausgeübte Ziehkraft in Abhängigkeit von den gewonnenen Messungen ändert, wobei die Ziehkraft zum Erhöhen des endgültigen Durchmessers des gezogenen Rohres vermindert wird.

6. Verfahren nach einem der Ansprüche 1 bis 5, bei dem die Hochtemperaturflüssigkeit ein Ölbad ist und das Rohr für 8 bis 16 Sekunden unmittelbar vor dem Ziehschritt in das Ölbad getaucht wird.

7. Verfahren nach Anspruch 6, bei dem das Hochtemperaturflüssigkeitsbad ein synthetisches Fluorkohlenstoff-Öl ist.

8. Verfahren nach einem der Ansprüche 1 bis 7, bei dem das polierte Werkzeug ein poliertes Diamant-Werkzeug ist.

9. Verfahren nach einem der Ansprüche 1 bis 8, bei dem das Rohr durch das polierte Werkzeug mit einem Greifer gezogen wird, der von einer Motorvorrichtung mit einstellbarer Geschwindigkeit gezogen wird.

10. Verfahren nach Anspruch 5 und 9, welches Verfahren kontinuierlich ausgeführt wird und bei dem ferner die Schritte vorgesehen sind, daß man den Durchmesser des voranschreitenden gezogenen Rohres optisch mißt, um wenigstens ein Steuersignal zu gewinnen, das eine Funktion des Außendurchmessers des gezogenen Rohres ist, und den geschwindigkeitseinstellbaren Motor durch dieses (diese) Signal(e) steuert, wobei die Geschwindigkeit des Ziehmotors zum Erhöhen des Durchmessers des gezogenen Rohres auf eine vorbestimmte Abmessung verlangsamt wird.

11. Verfahren nach irgendeinem vorstehenden Anspruch, bei dem das Flüssigkeitsbad eine Temperatur von wenigstens 180 °C hat.

12. Vorrichtung zum Ziehen von Thermoplast-Rohren zum Verstärken der optischen und abmessungsmäßigen Eigenschaften der Rohre, welche Vorrichtung enthält:

(a) eine Flüssigkeitsbadvorrichtung zum Erhitzen des Rohres,

(b) ein Ziehwerkzeug, das unmittelbar angrenzend an die Flüssigkeitsbadvorrichtung angeordnet ist, zum Ziehen des Rohres, nachdem es erhitzt worden ist,

(c) Mittel (140) zum Ziehen des Rohres durch die Erhitzungsvorrichtung und das Ziehwerkzeug,

(d) eine Kühleinrichtung (127) zum schnellen Kühlen des Rohres,

**dadurch gekennzeichnet,**

daß das Thermoplast-Rohr ein Fluorpolymer-Rohr ist und daß die Flüssigkeitsbadvorrichtung ein heißes Ölbad zum Erhitzen des Rohres auf wenigstens 180 °C ist.

13. Vorrichtung nach Anspruch 12, welche ferner enthält:

(e) eine Einrichtung (136) zum Messen des Rohres nach dem Ziehen und zum Erzeugen eines Steuersignals aufgrund der Messung,

(f) eine geschwindigkeitsveränderliche Motorvorrichtung (141), die zum Verändern der Geschwindigkeit der Mittel zum Ziehen des Rohres auf das Steuersignal anspricht,

wobei die Ziehgeschwindigkeit zum Erhöhen des Durchmessers des gezogenen Rohres vermindert werden kann.

14. Vorrichtung nach Anspruch 12 oder 13, bei der das Ziehwerkzeug ein poliertes Diamant-Werkzeug ist.

15. Fluorkohlenstoff-Rohr, das gemäß dem Verfahren nach Anspruch 1 gezogen worden ist und einen Außendurchmesser von 0,25 bis 2,5 mm, eine Konzentrizität von mehr als 95% und einen Lichtdurchlaßgrad von mehr als 90% hat.

FIG. 1

FIG. 6

FIG. 2

STATIC ELIMINATOR BLOWER

TEMPERATURE CONTROLLER

CLEANING 50
HEATING 51
DRAWING 52
RAPIDLY COOLING 53
STRESS RELAXATION 54

EP 0 256 644 B1

12

FIG. 3

FIG. 4a

FIG. 4b

FIG. 4c

FIG. 5a

FIG.5b

FIG.5c